(19) Europäisches Patentamt
European Patent Office
Office européen des brevets

(11) EP 0 645 880 B1

(12) **EUROPEAN PATENT SPECIFICATION**

(45) Date of publication and mention
of the grant of the patent:
**04.03.1998 Bulletin 1998/10**

(51) Int Cl.6: **H02P 21/00**

(21) Application number: **94307094.6**

(22) Date of filing: **28.09.1994**

(54) **Variable speed driving apparatus for an AC motor**

Antriebsvorrichtung mit variabler Geschwindigkeit für einen Wechselstrommotor

Appareil d'entraînement à vitesse variable pour un moteur à courant alternatif

(84) Designated Contracting States:
**DE GB IT**

(30) Priority: **28.09.1993 JP 264182/93**

(43) Date of publication of application:
**29.03.1995 Bulletin 1995/13**

(73) Proprietor: **FUJI ELECTRIC CO. LTD.**
**Kawasaki 210 (JP)**

(72) Inventor: **Umida, Hidetoshi,**
**c/o Fuji Electric Co., Ltd.**
**Kawasaki-ku, Kawasaki 210 (JP)**

(74) Representative: **Bridge-Butler, Alan James et al**
**G.F. Redfern & Co.,**
**7 Staple Inn,**
**Holborn**
**London WC1V 7QF (GB)**

(56) References cited:
**EP-A- 0 119 583**        **EP-A- 0 436 138**
**EP-A- 0 490 024**

- **IEEE TRANSACTIONS ON INDUSTRIAL ELECTRONICS AND CONTROL, vol.37, no.6, December 1990, NEW YORK US pages 477 - 482, XP179409 C.C. CHAN ET AL 'An Effective Method for Rotor Resistance Identifikation for High-Performance Induction Motor Vector Control'**
- **PATENT ABSTRACTS OF JAPAN vol. 9, no. 280 (E-356) (2003) 8 November 1985 & JP-A-60 121 982 (MITSUBISHI DENKI K.K.) 29 June 1985**

**Description**

The present invention relates to a variable speed driving apparatus for an AC motor which controls primary resistance and/or leakage inductance of the AC motor at the desired values.

Figure 13 is a block diagram of a variable speed driving apparatus according to the prior art. In Figure 13, reference numeral 101 designates an AC motor such as an induction motor or a synchronous motor; 102 designates a power converter such as an inverter; and 103 is a reference AC voltage value generator which feeds unique reference frequency and amplitude values of AC voltage supplied to the AC motor 101 via the power converter 102.

This variable speed driving apparatus drives the AC motor at variable speed by employing the power converter as a variable voltage and variable frequency power supply.

In the figure, symbols $v_{1a}^*$, $v_{1b}^*$, and $v_{1c}^*$ designate reference primary voltage values of the phases (a phase, b phase and c phase) of the AC motor 101, and $v_{1a}$, $v_{1b}$, and $v_{1c}$ designate primary voltage values (detected values).

In the above described prior art, the reference frequency and amplitude values directly output from the reference AC voltage value generator 103 should be adjusted in each case to stably drive the AC motor, since optimum reference frequency and amplitude values differ depending on the primary resistance consisting of the resistance of a stator and wiring resistance of the AC motor 101, and the leakage inductance.

Moreover, the adjustment itself is very difficult because of the complexity of the relationship between the primary resistance or the leakage inductance and the values of adjustment.

In view of the foregoing, an object of the present invention is to provide a variable speed driving apparatus for an AC motor which electrically adjusts equivalent primary resistance and leakage inductance of the AC motor to the desired values, eliminates cumbersome individual adjustment, and facilitates stable drive of the AC motor.

The object of the present invention is achieved by providing a variable speed driving apparatus for an AC motor, which comprises a reference AC voltage generator for outputting first reference AC voltage values including a frequency and amplitude, and a power converter for supplying AC voltage of variable voltage and variable frequency based on second reference AC voltage values, with current detectors for detecting phase currents output from the power converter; a first regulator which further comprises amplifiers for amplifying the phase current values detected by the current detectors; and subtracters for subtracting output signals of the amplifiers from the first reference AC voltage values and for outputting results of the subtracting to the power converter as second reference AC voltage values.

The dependent Claims defines further embodiments of the invention.

The present invention will now be described in detail with reference to the accompanying drawings, in which:

Figures 1 (a) and (b) show block diagrams of the first embodiment of the present invention;
Figures 2 (a), (b) and (c) show block diagrams of a modification of the first embodiment;
Figures 3 is a block diagram of the second embodiment of the present invention;
Figure 4 is a block diagram showing a modification of the second embodiment;
Figures 5 (a) and (b) show block diagrams of the third embodiment of the present invention;
Figures 6 (a), (b) and (c) show a modification of the third embodiment;
Figures 7 (a) and (b) show block diagrams of the fourth embodiment of the present invention;
Figure 8 is a block diagram showing a modification of the fourth embodiment;
Figure 9 is a block diagram showing the fifth embodiment of the present invention;
Figure 10 is a block diagram showing the sixth embodiment of the present invention;
Figure 11 is a block diagram showing the seventh embodiment of the present invention;
Figure 12 is a block diagram showing the eighth embodiment of the present invention; and
Figure 13 is a block diagram showing a variable speed driving apparatus of the prior art.

In the embodiments described hereinafter, a three phase AC motor is selected solely for simplicity. The present invention is applicable to the driving of motors of other numbers of phases. Only the number of constituent parts will differ, corresponding to the number of phases.

1) Function of the first embodiment.

This varies the equivalent primary resistance of the AC motor by amplifying the phase currents of the AC motor $i_{1a}$, $i_{1b}$ and $i_{1c}$ detected by the current detectors in the first regulator which comprises the amplifier with gain $K_R$ and by feeding final reference voltage values obtained by subtracting the amplified phase currents from the reference phase voltage values $v_{1a}^*$, $v_{1b}^*$ and $v_{1c}^*$ to the power converter.

In the case of the three-phase AC motor, final reference voltage values $v_1 s$ ($v_{1a}$, $v_{1b}$, $v_{1c}$) are given by equation (1) which considers reference phase voltage values $v_1^* s(v_{1a}^*, v_{1b}^*, v_{1c}^*)$ and the detected primary current values $i_1 s$ ($i_{1a}$, $i_{1b}$ and $i_{1c}$).

$$v_{1a} = v_{1a}{}^* - K_R i_{1a} \quad )$$
$$v_{1b} = v_{1b}{}^* - K_R i_{1b} \quad ) \quad (1)$$
$$v_{1c} = v_{1c}{}^* - K_R i_{1c} \quad )$$

The impedance considered on the basis of the reference AC voltage value is given by equation (2) by dividing each pair of equation (1) by each of the corresponding detected phase current values.

$$v_{1a}{}^*/i_{1a}=K_R+v_{1a}/i_{1a}=K_R+R_1+pL\sigma+e_a/i_{1a} \quad )$$
$$v_{1b}{}^*/i_{1b}=K_R+v_{1b}/i_{1b}=K_R+R_1+pL\sigma+e_b/i_{1b} \quad ) \quad (2)$$
$$v_{1c}{}^*/i_{1c}=K_R+v_{1c}/i_{1c}=K_R+R_1+pL\sigma+e_c/i_{1c} \quad )$$

Equation (3) below is obtained from equation (2).

In equations (2) and (3), $R_1$ represents the sum of the primary resistance value, the wiring resistance value and the resistance value of the stator winding of the AC motor; $L\sigma$ the leakage inductance; e counterelectromotive force; and p the differentiating operator.

$$v_{1a} = R_1 i_{1a} + pL\sigma i_{1a} + e_a \quad )$$
$$v_{1b} = R_1 i_{1b} + pL\sigma i_{1b} + e_b \quad ) \quad (3)$$
$$v_{1c} = R_1 i_{1c} + pL\sigma i_{1c} + e_c \quad )$$

That is; the final reference voltage values are, when considered on the basis of the reference AC voltage values (initial reference values), equivalent to a resistance $K_R$ inserted in series with the impedance of the AC motor.

By setting $(K_R-R_1)$ in place of $K_R$, equation (4) is derived from equation (2).

$$v_{1a}{}^*/i_{1a}= K_R + pL\sigma + e_a/i_{1a} \quad )$$
$$v_{1b}{}^*/i_{1b}= K_R + pL\sigma + e_b/i_{1b} \quad ) \quad (4)$$
$$v_{1c}{}^*/i_{1c}= K_R + pL\sigma + e_c/i_{1c} \quad )$$

As the first term of the right hand side of equation (4) clearly indicates, arbitral primary resistance $K_R$ can be realized as the impedance of the AC motor considered on the basis of the reference AC voltage values.

Moreover, stable operation performance is obtained by putting $K_R \gg R_1$, by which influence of temperature variation of $R_1$, and difference between set and actual values of $R_1$ caused by setting error are suppressed.

2) Function of the secon apparatus described

The function of the apparatus of the first embodiment is also achieved by feeding back orthogonal biaxial current components to biaxial reference voltage values in a rotating orthogonal coordinate system, which corresponds to function of the apparatus of the second embodiment.

The relationship between the voltage and the current of the AC motor in the rotating orthogonal coordinate system is expressed by equation (5):

$$\begin{pmatrix} v_{1d} \\ v_{1q} \end{pmatrix} = \begin{pmatrix} R_1+pL\sigma & -\omega_1 L\sigma \\ \omega_1 L\sigma & R_1+pL\sigma \end{pmatrix} \begin{pmatrix} i_{1d} \\ i_{1q} \end{pmatrix} + \begin{pmatrix} e_d \\ e_q \end{pmatrix} \quad (5)$$

In equation (5), $v_{1d}$ and $v_{1q}$ represent d- and q-axis components of the primary voltage, $i_{1d}$ and $i_{1q}$ d- and q-axis components of the primary current, $e_d$ and $e_q$ d- and q-axis components of the counterelectromotive force and $\omega_1$ the primary angular frequency.

The apparatus of claim 2 feeds back the biaxial current components as expressed in equation (6) through the regulator which comprises amplifiers with gain $K_R$.

$$\begin{pmatrix} v_{1d} \\ v_{1q} \end{pmatrix} = \begin{pmatrix} v_{1d}^* \\ v_{1q}^* \end{pmatrix} - \begin{pmatrix} K_R & 0 \\ 0 & K_R \end{pmatrix} \begin{pmatrix} i_{1d} \\ i_{1q} \end{pmatrix} \tag{6}$$

Here, $v_{1d}^*$ and $v_{1q}^*$ represent d- and q-axis reference voltage values.

By substituting equation (5) in equation (6) and by modifying substituted equation (6), the series resistance on the primary side of the AC motor becomes equivalent to $(K_R + R_1)$ as equation (7) expresses.

$$\begin{pmatrix} v_{1d}^* \\ v_{1q}^* \end{pmatrix} = \begin{pmatrix} K_R + R_1 + pL\sigma & -\omega_1 L\sigma \\ \omega_1 L\sigma & K_R + R_1 + pL\sigma \end{pmatrix} \begin{pmatrix} i_{1d} \\ i_{1q} \end{pmatrix} + \begin{pmatrix} e_d \\ e_q \end{pmatrix} \tag{7}$$

By substituting $(K_R - R_1)$ for gain $K_R$, equation (8) and arbitral primary resistance $K_R$ are obtained as in the apparatus of the first embodiment.

Stable operation performance is obtained by putting $K_R \gg R_1$, by means of which the influence of an error in $R_1$ is suppressed.

$$\begin{pmatrix} v_{1d}^* \\ v_{1q}^* \end{pmatrix} = \begin{pmatrix} K_R + pL\sigma & -\omega_1 L\sigma \\ \omega_1 L\sigma & K_R + pL\sigma \end{pmatrix} \begin{pmatrix} i_{1d} \\ i_{1q} \end{pmatrix} + \begin{pmatrix} e_d \\ e_q \end{pmatrix} \tag{8}$$

3) Function of the third apparatus described

For the third apparatus described above, equation (9) is obtained by setting $K_L$ as the gain of the differentiators which constitute the third regulator and by subtracting the detected primary current value of each phase from the reference AC voltage value.

$$\left. \begin{aligned} v_{1a} &= v_{1a}^* - pK_R i_{1a} \\ v_{1b} &= v_{1b}^* - pK_R i_{1b} \\ v_{1c} &= v_{1c}^* - pK_R i_{1c} \end{aligned} \right\} \tag{9}$$

The impedance considered on the basis of the reference AC voltage value is obtained, as equation (10) expresses, by dividing equation (9) by the detected primary current values $i_{1a}$, $i_{1b}$ and $i_{1c}$.

$$\left. \begin{aligned} v_{1a}^*/i_{1a} &= pK_L + v_{1a}/i_{1a} = R_1 + pK_L + pL\sigma + e_a/i_{1a} \\ v_{1b}^*/i_{1b} &= pK_L + v_{1b}/i_{1b} = R_1 + pK_L + pL\sigma + e_b/i_{1b} \\ v_{1c}^*/i_{1c} &= pK_L + v_{1c}/i_{1c} = R_1 + pK_L + pL\sigma + e_c/i_{1c} \end{aligned} \right\} \tag{10}$$

Thus, if considered on the basis of the reference AC voltage value, the leakage inductance becomes equivalent to $(K_L + L\sigma)$.

By further substituting $(K_L - L\sigma)$ for $K_L$ in equation (10), equation (11) is obtained and the leakage inductance can be set arbitrarily. If we assume $(-L\sigma)$ for the gain, the facial leakage inductance can be brought to zero.

$$v_{1a}*/i_{1a} = R_1 + pK_L + e\ a/i_{1a} \qquad )$$
$$v_{1b}*/i_{1b} = R_1 + pK_L + e\ b/i_{1b} \qquad )\quad (11)$$
$$v_{1c}*/i_{1c} = R_1 + pK_L + e\ c/i_{1c} \qquad )$$

4) Function of the fourth apparatus described

The function of the third apparatus is also achieved by amplifying or by differentiating the orthogonal biaxial current components in the fourth regulator and by feeding back the amplified or differentiated values to the biaxial reference voltage values in a rotating orthogonal coordinate system, which corresponds to the function of the fourth apparatus described above.

That is; the feedback is operated by the fourth regulator with reference to the leakage inductance term of equation (5) as equation (12) expresses.

$$\begin{pmatrix} v_{1d} \\ v_{1q} \end{pmatrix} = \begin{pmatrix} v_{1d}* \\ v_{1q}* \end{pmatrix} - \begin{pmatrix} pK_{L1} & -\omega_1 K_{L2} \\ \omega_1 K_{L2} & pK_{L1} \end{pmatrix} \begin{pmatrix} i_{1d} \\ i_{1q} \end{pmatrix} \quad (12)$$

In equation (12), $K_{L1}$ represents the gain of the differentiators, and $K_{L2}$ the gain of the amplifiers. Equation (13) is obtained by substituting equation (5) for equation (12) and by modifying the substituted equation (12).

$$\begin{pmatrix} v_{1d}* \\ v_{1q}* \end{pmatrix} = \begin{pmatrix} R_1 + pL\sigma + pK_{L1} & -\omega_1 L\sigma - \omega_1 K_{L2} \\ \omega_1 L\sigma + \omega_1 K_{L2} & R_1 + pL\sigma + pK_{L1} \end{pmatrix} \begin{pmatrix} i_{1d} \\ i_{1q} \end{pmatrix} + \begin{pmatrix} e_d \\ e_q \end{pmatrix} \quad (13)$$

We know from equation (13) that the leakage inductance includes transient impedance $p(L\sigma + K_{L1})$ and reactance component $\omega_1(L\sigma + K_{L2})$. The gains $K_{L1}$ and $K_{L2}$ can be set independently in the differentiators and the amplifiers.

Equation (14) is obtained by replacing $K_{L1}$ and $K_{L2}$ by $(K_{L1} - L\sigma)$ and $(K_{L2} - L\sigma)$, respectively.

$$\begin{pmatrix} v_{1d}* \\ v_{1q}* \end{pmatrix} = \begin{pmatrix} R_1 + pK_{L1} & -\omega_1 K_{L2} \\ \omega_1 K_{L2} & R_1 + pK_{L1} \end{pmatrix} \begin{pmatrix} i_{1d} \\ i_{1q} \end{pmatrix} + \begin{pmatrix} e_d \\ e_q \end{pmatrix} \quad (14)$$

We know from equation (14) that the leakage inductance can be set at or changed to an arbitrary value by adjusting $K_{L1}$ and $K_{L2}$, since the transient impedance and the reactance component become $pK_{L1}$ and $\omega_1 K_{L2}$, respectively.

If we assume $(-L\sigma)$ for the gains of the differentiators and the amplifiers, the facial leakage inductance or leakage reactance can be brought to zero.

The first apparatus described above controls equivalent primary resistance with the gain $K_R$ of the first regulator. The leakage inductance can be also controlled with the gain $K_L$ of the third regulator by combining the first and third regulators.

Since the first and the third regulators do not interfere with each other, the primary resistance and the leakage inductance can be controlled independently by the independent operation of each regulator.

The second apparatus described above controls equivalent primary resistance with the gain $K_R$ of the first regulator. The leakage inductance can be also controlled with the gain $K_{L1}$ and $K_{L2}$ of the differentiators and the amplifiers of the fourth regulator by combining the first and fourth regulators.

Since the first and the fourth regulators do not interfere with each other, the primary resistance and the leakage inductance can be controlled independently.

The fourth apparatus described above controls equivalent leakage inductance. The equivalent primary resistance can be also set or changed arbitrarily by providing the apparatus with a feedback function of the first regulator which feeds back the detected primary currents to the reference AC voltage values with the amplifiers of gain $K_R$ in the first regulator.

Since the first and the fourth regulators do not interfere with each other, the primary resistance and the leakage inductance can be controlled independently.

The second apparatus described above can vary equivalent primary resistance. The equivalent leakage inductance can be also set or changed arbitrarily by providing this apparatus with a feedback function of the third regulator which feeds back the differentiated primary currents to the reference AC voltage value with the differentiators of gain $K_L$.

Since the second and the third regulators do not interfere with each other, the primary resistance and the leakage inductance can be controlled independently.

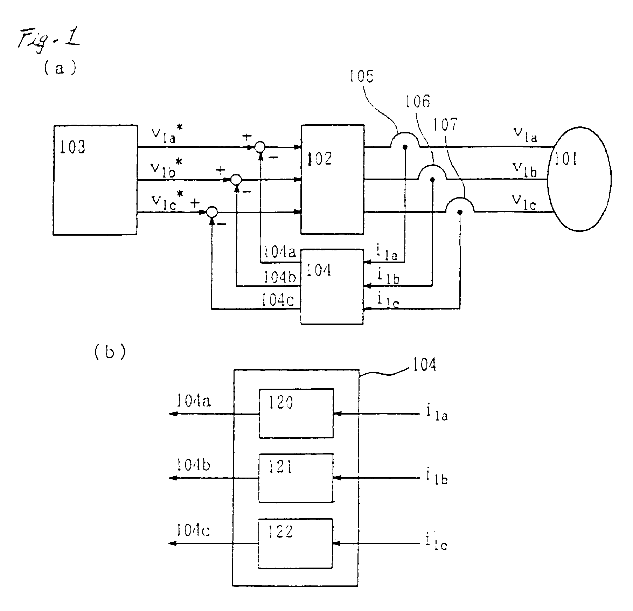

Figures 1 (a) and (b) show block diagrams of the first embodiment of the present invention in which the same parts with those in Figure 13 are designated by the same reference numerals.

In Figure 1 (a), current detectors 105, 106, 107 are disposed between the power converter 102 and the AC motor 101. Phase current values $i_{1a}$, $i_{1b}$, $i_{1c}$ detected by the respective current detectors 105, 106, 107 are input to a regulator 104. Output signals 104a, 104b, 104c of the regulator 104 are subtracted from the reference primary voltage values $v_{1a}{}^*$, $v_{1b}{}^*$, $v_{1c}{}^*$, respectively, fed from the reference AC voltage generator 103 and the subtraction results are input to the power converter 102 as new (final) reference primary voltage values.

As Figure 1 (b) shows, the regulator 104 (first regulator) comprises three amplifiers 120, 121, 122, one amplifier corresponding to each phase. The amplifiers 120, 121, 122 produce their output signals 104a, 104b, 104c by multiplying the detected phase current values $i_{1a}$, $i_{1b}$, $i_{1c}$ by a predetermined gain $K_R$. The resistance component is set through the gain $K_R$ of the amplifiers 120, 121, 122.

As described above, this embodiment varies the equivalent primary resistance of the AC motor 101 by subtracting the amplified detected phase current values $i_{1a}$, $i_{1b}$, $i_{1c}$ amplified by the gain $K_R$ of the amplifiers 120, 121, 122 from the reference primary voltage values $v_{1a}{}^*$, $v_{1b}{}^*$, $v_{1c}{}^*$.

That is: feeding of the primary phase voltage values expressed in equation (1) as new reference values to the power converter 101 is, when considered on the basis of the initial (old) reference primary voltage values, equivalent to that resistance $K_R$ is connected in series to the impedance of the AC motor 101. Therefore, an arbitrary primary resistance value can be obtained by setting an appropriate gain $K_R$

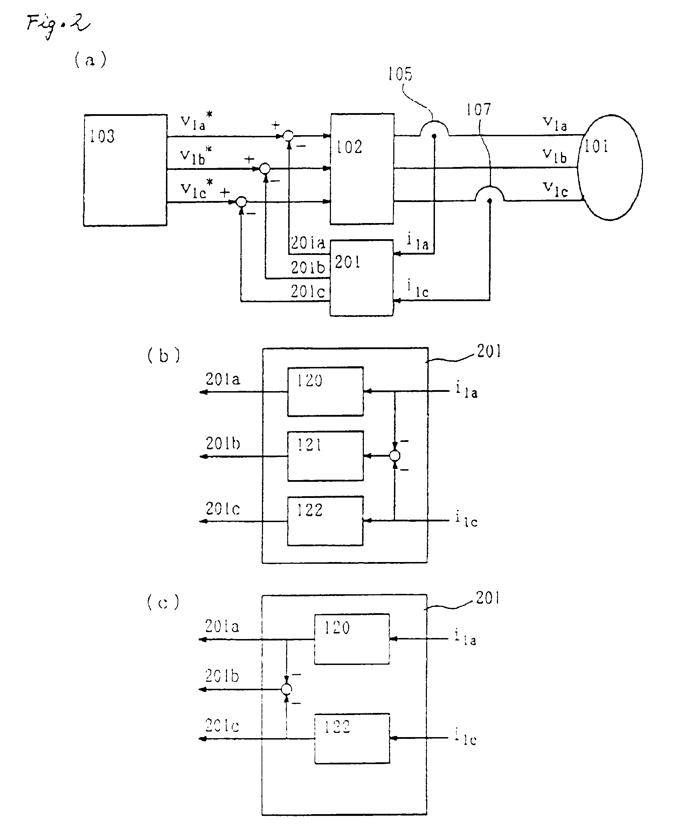

Figures 2 (a), (b) and (c) show a modification of the first embodiment. As Figure 2 (a) shows, this modification detects currents of two phases $i_{1a}$, $i_{1c}$ by two current detectors 105, 107 and calculates respective output signals $201_a$, $201_b$, $201_c$ for each of the three phases in a regulator 201.

Figures 2 (b) and (c) show alternative configurations of the regulator 201. The regulator 201 of Figure 2 (b) comprises three amplifiers 120, 121, 122, and the input signal to the amplifier 121 is synthesized on the input side from the input signals to amplifiers 120 and 122. The regulator 201 of Figure 2 (c) is composed of two amplifiers 120, 122, and the output signals for the three phases are synthesized on the output side from the output signals of the two amplifiers 120, 122.

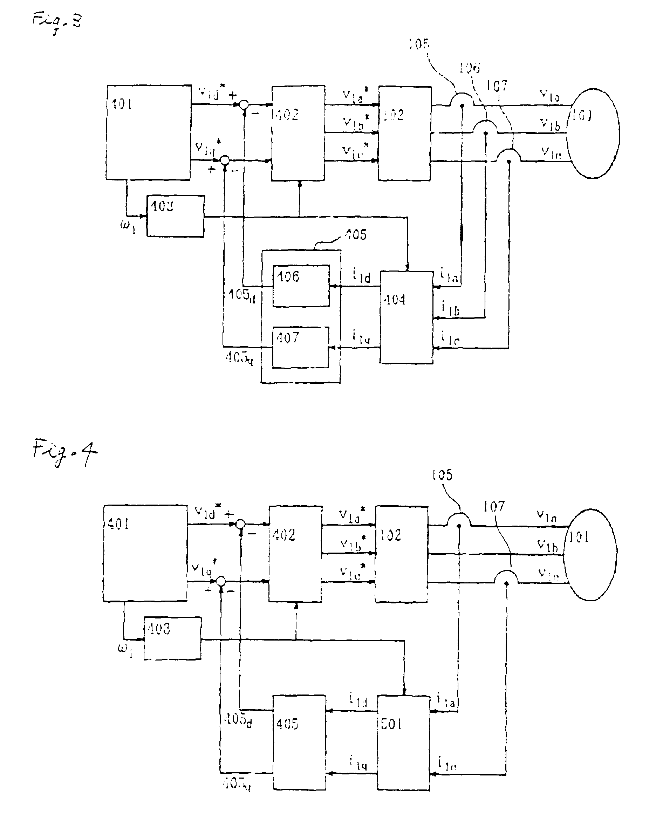

Figure 3 is a block diagram of the second embodiment of the present invention. In the figure, reference numeral 401 designates a frequency- and biaxial reference voltage generator which outputs a reference primary frequency $\omega_1$ and biaxial reference voltage values $v_{1d}{}^*$, $v_{1q}{}^*$ in a rotating orthogonal coordinate system.

Reference numeral 404 designates a vector transformer which transforms detected phase current values $i_{1a}$, $i_{1b}$, $i_{1c}$ detected by the current detectors 105, 106, 107 to biaxial current components $i_{1d}$, $i_{1q}$ in a rotating orthogonal coordinate system. A phase value obtained by integrating the reference primary frequency $\omega_1$ in an integrator 403 is input to the vector transformer 404.

The biaxial current components $i_{1d}$, $i_{1q}$ output from the vector transformer 404 are fed to a regulator 405 (second regulator) which comprises amplifiers 406, 407, in which the biaxial current components $i_{1d}$, $i_{1q}$ are multiplied by gain $K_R$ and converted to signals $405_d$, $405_q$. These signals $405_d$, $405_q$ are subtracted from the biaxial reference voltage values $v_{1d}{}^*$, $v_{1q}{}^*$ output from the frequency- and biaxial reference voltage generator 401 and the results of subtraction are input to a vector transformer 402.

The vector transformer 402 transforms the biaxial reference voltage values $v_{1d}{}^*$, $v_{1q}{}^*$ to the reference primary voltage values for each phase $v_{1a}{}^*$, $v_{1b}{}^*$, $v_{1c}{}^*$ and outputs these transformed reference values to the power converter 102.

The power converter 102 generates the primary phase voltage values $v_{1a}$, $v_{1b}$, $v_{1c}$ based on the input reference primary voltage values $v_{1a}{}^*$, $v_{1b}{}^*$, $v_{1c}{}^*$ and feeds the primary phase voltage values $v_{1a}$, $v_{1b}$, $v_{1c}$ to the AC motor 101.

An arbitrary primary resistance value for the AC motor is achieved, as by the first embodiment, with the above described configuration by feeding back the biaxial current components $i_{1d}$, $i_{1q}$ in the rotating orthogonal coordinate system to the biaxial reference voltage values $v_{1d}{}^*$, $v_{1q}{}^*$ and by obtaining final reference phase voltage values $v_{1a}{}^*$, $v_{1b}{}^*$, $v_{1c}{}^*$ by coordinate transformation of the newly obtained biaxial reference voltage values.

By setting $K_R \gg R_1$, where $R_1$ represents the sum of the primary resistance of the AC motor, the wiring resistance and the stator winding resistance, the influence of an error in the $R_1$ is suppressed and stable drive performance is obtained.

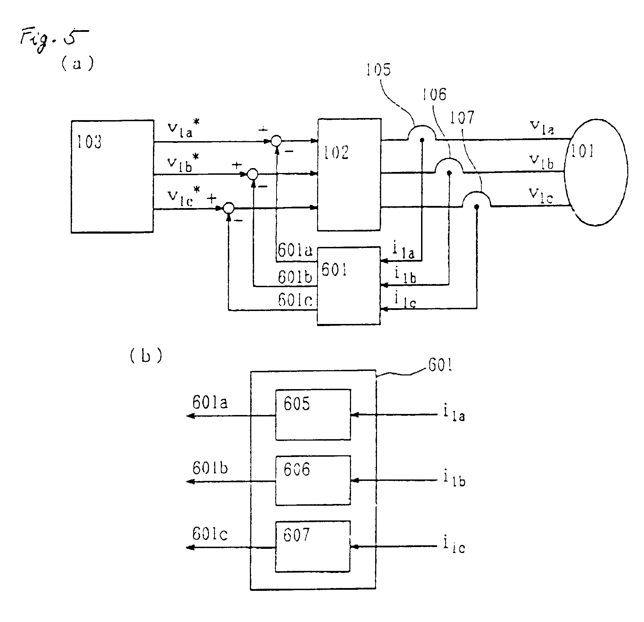

Figure 4 shows a modification of the second embodiment. Since the modification of Figure 4 differs from the embodiment of Figure 3 only in that two current detectors 105, 107 are provided for feeding phase currents to the vector transformer 501, and since the overall operations of the embodiments of Figures 3 and 4 are the same, their explanation is omitted.

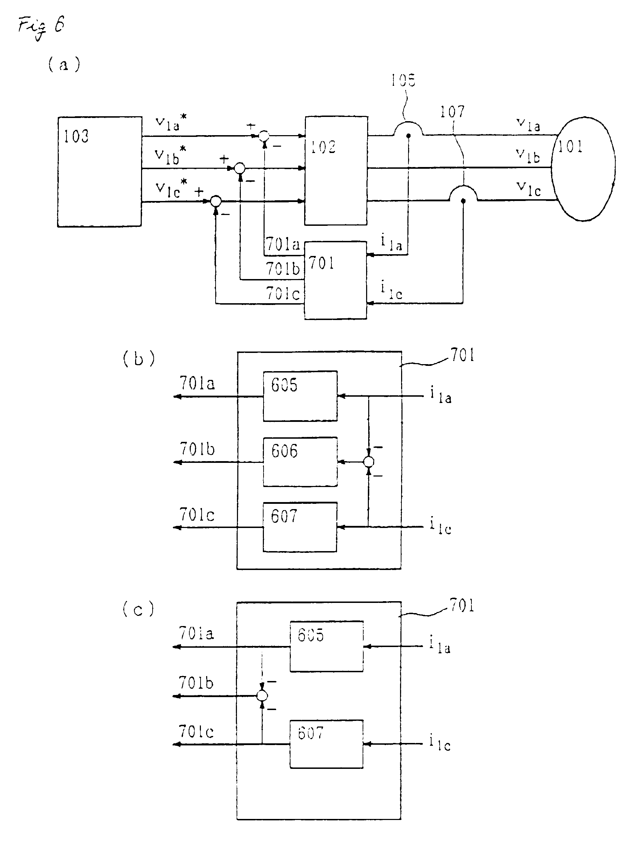

Figure 5 (a) is a block diagram showing a configuration of the third embodiment of the present invention, which is the same with the configuration shown in Figure 1 (a) except for a regulator 601.

As Figure 5 (b) shows, the regulator 601 comprises differentiators 605, 606, 607, which output signals $601_a$, $601_b$, $601_c$ obtained by multiplying their gain $K_L$ and the detected phase current values $i_{1a}$, $i_{1b}$, $i_{1c}$. The output signals $601_a$, $601_b$, $601_c$ are subtracted from the reference primary voltage values $v_{1a}{}^*$, $v_{1b}{}^*$, $v_{1c}{}^*$, respectively, and the results of the subtraction is input as final reference primary voltage values, to the power converter 102.

An inductance component is set by selecting the gain $K_L$ of the differentiators 605, 606, 607.

This embodiment can set and alter equivalent leakage inductance of the AC motor arbitrarily as equations 10 and 11 express by adjusting the gain $K_L$ of the differentiators 605, 606, 607. When the equivalent leakage inductance is set at an optimum value, it becomes unnecessary to adjust the reference AC voltage values individually apparatus by apparatus.

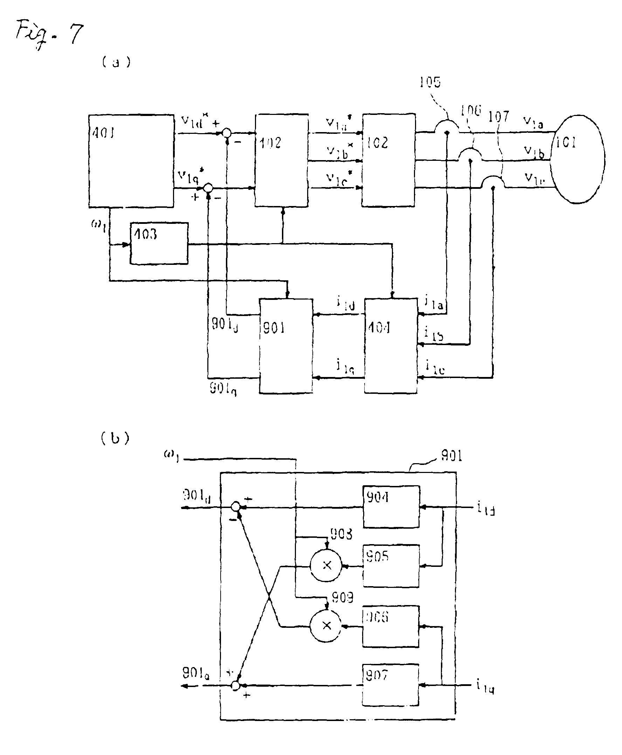

Figures 6 (a), (b) and (c) show a modification of the third embodiment. As Figure 6 (a) shows, this modification detects currents of two phases $i_{1a}$, $i_{1c}$ by two current detectors 105, 107 and calculates output signals for each phase $701_a$, $701_b$, $701_c$ in a regulator 701.

Figures 6 (b) and (c) show configurations of the regulator 701. The regulator 701 of Figure 6 (b) comprises three differentiators 605, 606, 607, in which the input signal to the differentiator 606 is synthesized on the input side. The regulator 701 of Figure 6 (c) comprises two differentiators 605, 607, in which the output signal $701_b$ is obtained from the signals $701_a$ and $701_c$ output from the differentiators 605, 607.

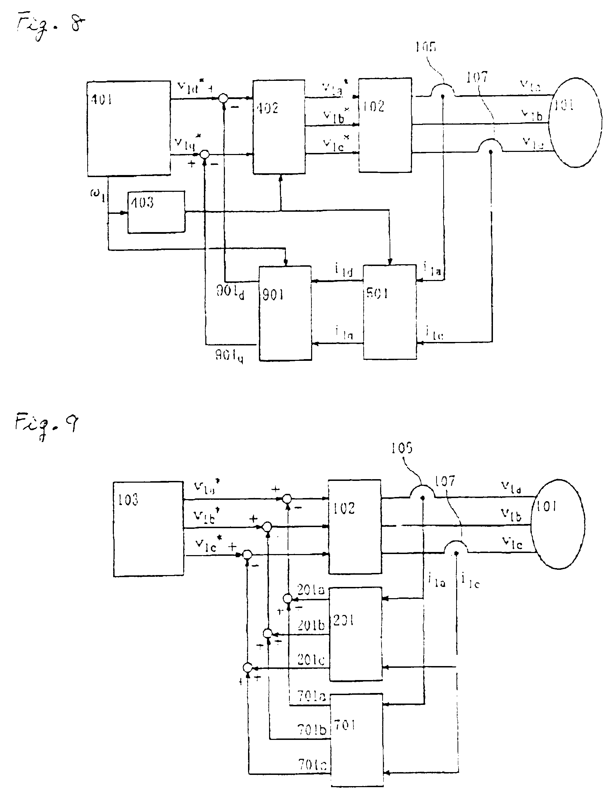

Figure 7 (a) shows a configuration of the fourth embodiment. The configuration of Figure 7 (a) differs from the embodiment of Figure 3 only in a configuration of a regulator 901. In this embodiment, the reference primary frequency value $\omega_1$ is input also to the regulator 901.

As Figure 7 (b) shows, the regulator 901 comprises differentiators 904, 907 and amplifiers 905, 906 to which biaxial current components $i_{1d}$, $i_{1q}$, calculated in the vector transformer 404 are input; multipliers 908, 909 which multiply output signals of the amplifiers 905, 906 and the reference primary frequency value $\omega_1$; and a means for adding and subtracting which adds and subtracts output signals of the multipliers 908, 909 to and from the output signals of differentiators 904, 907.

The above described configuration calculates the output signals 901d, 901q of the regulator 901 based on the biaxial current components $i_{1d}$, $i_{1q}$ and the reference primary frequency value $\omega_1$. Leakage reactance of the AC motor is set through gain $K_{L2}$ of the amplifiers 905, 906 and transient leakage inductance through gain $K_{L1}$ of the differentiators 904, 907.

This embodiment can set and alter, as equations 13 and 14 express, transient impedance and reactance of the AC motor independently by adjusting the gain $K_{L1}$ of the differentiators 904, 907 and the gain $K_{L2}$ of the amplifiers 905, 906.

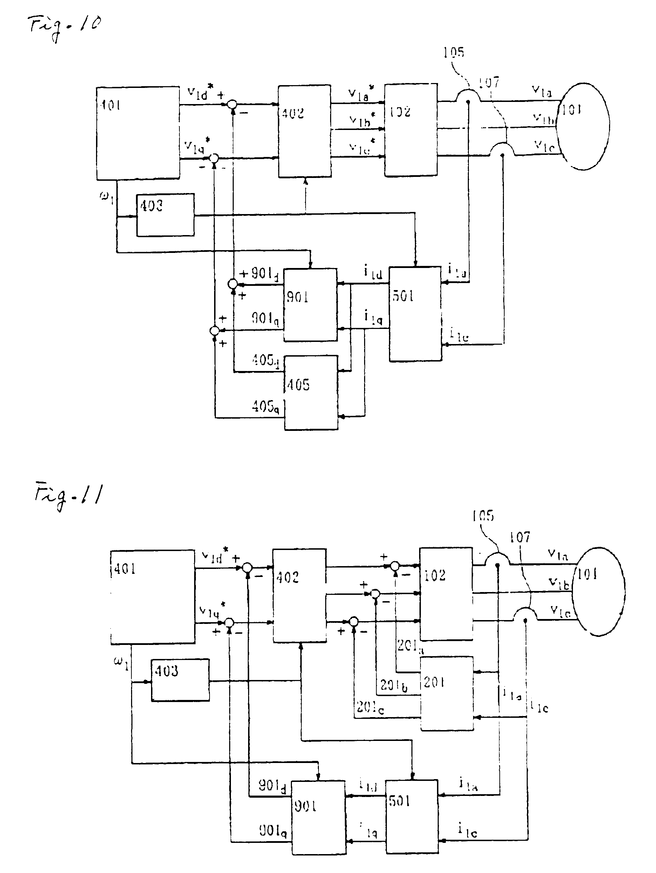

Figure 8 is a block diagram showing a modification of the fourth embodiment of the present invention.

This modification differs from the configuration of Figures 7 (a) and (b) only in that the modified configuration uses two current detectors 105, 107 for feeding the detected phase current values to the vector transformer 501.

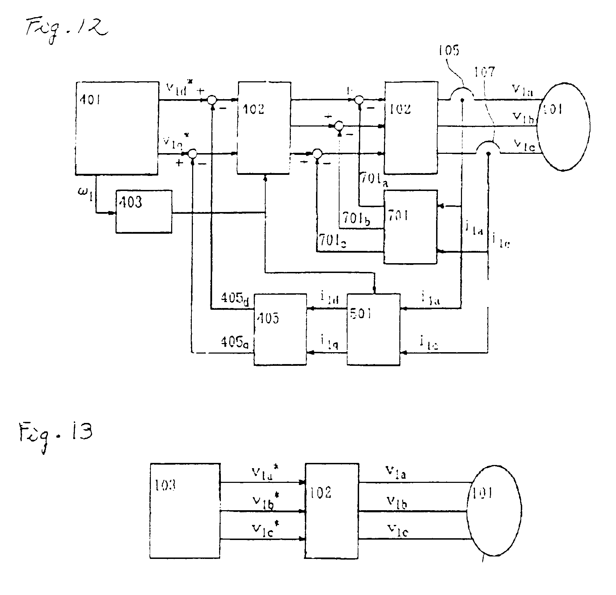

Figure 9 is a block diagram showing a configuration of the fifth embodiment of the present invention.

The fifth embodiment is configured by providing the modified configuration of the first embodiment shown in Figures 2 with the regulator 701 of the modification of the third embodiment shown in Figures 6. The output signals $201_a$, $201_b$, $201_c$ of the regulator 201 are added to the output signals $701_a$, $701_b$, $701_c$ of the regulator 701. Results of the addition are subtracted from the reference AC voltage values $v_{1a}{}^*$, $v_{1b}{}^*$, $v_{1c}{}^*$, and the results of this subtraction are output to the power converter 102.

The fifth embodiment adjusts equivalent primary resistance of the AC motor by the regulator 201 comprising the amplifiers of gain $K_R$ and equivalent leakage inductance by the regulator 701 comprised of the differentiators of gain $K_L$. Since the regulators 201 and 701 do not interfere with each other, the primary resistance and the leakage inductance can be controlled independently.

The same effect is obtained by providing the first embodiment of Figures 1 with the regulator 601 of the third embodiment of Figures 5 or the regulator 701 of the modification of third embodiment in Figures 6.

Figure 10 is a block diagram showing a configuration of the sixth embodiment of the present invention. The configuration of the sixth embodiment is obtained by providing the modified configuration of the second embodiment shown in Figure 4 with the regulator 901 of the modified configuration of the fourth embodiment shown in Figure 8.

The sixth embodiment adjusts equivalent primary resistance of the AC motor by the regulator 405 comprised of amplifiers of gain $K_R$ and equivalent leakage inductance by the regulator 901 comprised of the differentiators of gain $K_{L1}$ and the amplifiers of gain $K_{L2}$.

The same effect is obtained by providing the second embodiment of Figures 3 with the regulator 901 of the fourth embodiment of Figures 7.

Figure 11 is a block diagram showing a configuration of the seventh embodiment of the present invention. The configuration of the seventh embodiment is obtained by providing the modified configuration of the fourth embodiment with the regulator 201 of the modified configuration of the first embodiment shown in Figures 2.

The seventh embodiment adjusts equivalent primary resistance of the AC motor by the regulator 201 comprised of the amplifiers of gain $K_R$ and equivalent leakage inductance by the regulator 901 comprised of the differentiators of gain $K_{L1}$ and the amplifiers of gain $K_{L2}$.

The same effect is obtained by providing the fourth embodiment of Figures 7 with the regulator 104 of the first embodiment of Figures 1 or the regulator 201 of the modified configuration of the first embodiment shown in Figures 2.

Figure 12 is a block diagram showing a configuration of the eighth embodiment of the present invention. The configuration of the eighth embodiment is obtained by providing the modified configuration of the second embodiment shown in Figure 4 with the regulator 701 of the modified configuration of the third embodiment shown in Figures 6. The eighth embodiment adjusts equivalent primary resistance of the AC motor by the regulator 405 comprised of the amplifiers of gain $K_R$ and equivalent leakage inductance by the regulator 701 comprised of the differentiators of gain $K_L$.

The same effect is obtained by providing the second embodiment of Figure 3 with the regulator 601 of the third embodiment of Figures 5, or the regulator 701 of the modified configuration of the third embodiment shown in Figure 6.

The embodiments described above are also realized easily by software installed on a microprocessor.

According to the first embodiment of the present invention, the equivalent primary resistance of the AC motor can be arbitrarily set and altered by properly setting the gain of the amplifiers without causing power loss which is inevitable when a resistor is connected. Especially, it becomes unnecessary to adjust individually, apparatus by apparatus, the reference AC voltage value as far as the primary resistance is set at an optimum value.

By proper setting of the gain of the amplifiers, more robust variable speed driving is realized against the error or the variation of $R_1$ (sum of the primary resistance of the AC motor, wiring resistance and the resistance of the stator winding).

According to the second embodiment, in addition to the effect of the first embodiment, a variable speed driving apparatus can be realized with the minimum constituent elements irrespective of number of phases of the power converter or an AC motor.

According to the third embodiment, the equivalent leakage inductance can be set and altered by properly setting the gain of the differentiators without causing reactive power which is inevitable when inductance is connected. Especially, it becomes unnecessary to adjust the reference AC voltage value apparatus by apparatus as far as the primary resistance is set at an optimum value.

The stability of variable speed driving is improved by reducing the time constant caused by the leakage inductance and $R_1$ by the third embodiment which can reduce the leakage inductance.

The fourth embodiment facilitates obtaining, in addition to the effect of the third embodiment, a variable speed driving apparatus with the minimum constituent elements irrespective of the number of phases of the power converter or AC motor. The fourth embodiment can set the transient impedance component and the reactance component independently by the adjustment of the gains of the differentiators and the amplifiers.

The stability of variable speed driving is improved by reducing the time constant caused by the leakage inductance and $R_1$ by the fourth embodiment which can reduce the leakage inductance and its reactance component.

Either one of from the fifth to the eighth embodiments facilitates improving stability of variable speed driving by reducing time constant caused by the equivalent primary resistance and the leakage inductance of the AC motor, since either one of the embodiments can simultaneously vary both the equivalent primary resistance and the leakage inductance.

These embodiments also facilitates simplification of the structure since the configuration of these embodiments can be realized simply by adding a regulator to the basic variable speed driving apparatus.

## Claims

1. A variable speed driving apparatus for an AC motor (101), comprising a reference AC voltage generator (103) for outputting first reference AC voltage values ($v_{1a}{}^*$, $v_{1b}{}^*$, $v_{1c}{}^*$) including a frequency and amplitude, a power converter (102) for supplying AC voltage of variable voltage and variable frequency based on second reference AC voltage values ($v_{1a}{}^*$, $v_{1b}{}^*$, $v_{1c}{}^*$);

current detectors (105, 106, 107) for detecting phase currents ($i_{1a}$, $i_{1b}$, $i_{1c}$) output from said power converter (102);
a regulator means (104, 201, 601, 701) to which the phase current values ($i_{1a}$, $i_{1b}$, $i_{1c}$) detected by the current detectors (105, 106, 107) are input, and which outputs signals (104a-c; 201a-c; 601a-c; 701a-c) to a number of subtracters which subtract the output signals of said regulator means from said first reference AC voltage values ($v_{1a}*$, $v_{1b}*$, $v_{1c}*$) and output the results of said subtraction to said power converter (102) as second reference AC voltage values.

2. A variable speed driving apparatus according to claim 1, characterised in that the regulator means (104, 201) comprises amplifiers (120, 121, 122) for amplifying said phase current values ($i_{1a}$, $i_{1b}$, $i_{1c}$) detected by said current detectors (105, 106, 107), the amplified values being input to the subtracters.

3. A variable speed driving apparatus according to claim 1, characterised in that the regulator means (601, 701) comprises differentiators (605, 606, 607) for differentiating phase current values ($i_{1a}$, $i_{1b}$, $i_{1c}$) detected by said current detectors (105, 106, 107), the differentiated values (601a, 601b, 601c; 701a, 701b, 701c) being input to the subtracters.

4. A variable speed driving apparatus according to claim 1, wherein the regulator means (401, 402, 403, 404, 901) comprises a frequency- and biaxial voltage reference value generator (401) for generating a reference primary frequency value ($\omega_1$) and reference biaxial voltage values ($v_{1d}*$, $v_{1q}*$) of said AC motor in a rotating orthogonal coordinate system;

a first vector transformer (404), to which a phase value operated from said reference primary frequency value is input, for transforming detected phase current values ($i_{1a}$, $i_{1b}$, $i_{1c}$) detected by said current detectors (105, 106, 107) to orthogonal biaxial current components ($i_{1d}$, $i_{1q}$);

further regulator means (405, 901) operating on said orthogonal biaxial current components ($i_{1d}$, $i_{1q}$) output from said first vector transformer (404);

subtracters for subtracting output signals (405d, 405q, 901d, 901q) of said further regulator means (405, 901) from said reference biaxial voltage values ($v_{1d}*$, $v_{1q}*$); and

a second vector transformer (402) for transforming output signals of said subtracters to reference phase voltage values ($v_{1a}*$, $v_{1b}*$, $v_{1c}*$) and for outputting said reference phase voltage values to said power converter (102).

5. A variable speed driving apparatus according to claim 4, wherein the further regulator means (405) comprises amplifiers (406, 407) for amplifying said orthogonal biaxial current components ($i_{1d}$, $i_{1q}$) output from said first vector transformer (404).

6. A variable speed driving apparatus according to claim 4, wherein the further regulator means (901) comprises differentiators (904, 907) and amplifiers (905, 906) to which said orthogonal biaxial current components ($i_{1d}$, $i_{1q}$) are input, multipliers (908, 909) for multiplying output signals from said amplifiers (905, 906) and said reference primary frequency value ($\omega_1$), and an adding- and subtracting means for adding and subtracting output signals of said multipliers (908, 909) to and from output signals of said differentiators (904, 907).

7. A variable speed driving apparatus for an AC motor as claimed in claim 2 wherein the regulator means further comprises:

differentiators (605, 606, 607) for differentiating phase current values ($i_{1a}$, $i_{1b}$, $i_{1c}$) detected by said current detectors (105, 106, 107); and

means for subtracting output signals (601a, 601b, 601c) of said differentiators (605, 606, 607) from said reference AC voltage values ($v_{1a}*$, $v_{1b}*$, $v_{1c}*$) and for outputting the results of said subtraction to said power converter (102).

8. A variable speed driving apparatus for an AC motor as claimed in claim 5, wherein the further regulator (405, 901) additionally comprises differentiators (904, 907) and amplifiers (905, 906) to which said orthogonal biaxial current components ($i_{1d}$, $i_{1q}$) are input, multipliers (908, 909) for multiplying output signals from said amplifiers (905, 906) and said reference primary frequency value ($\omega_1$), and an adding and subtracting means for adding and subtracting output signals of said multipliers (908, 909) to and from output signals of said differentiators (904, 907).

9. A variable speed driving apparatus for an AC motor as claimed in claim 6, wherein the regulator further comprises:

amplifiers for amplifying said phase current values detected by said current detectors (105, 106, 107); and

means for subtracting output signals (104a, 104b, 104c) of said regulator from said reference phase voltage

values ($v_{1a}^*$, $v_{1b}^*$, $v_{1c}^*$) output from said second vector transformer (402) and for outputting results of said subtracting means to said power converter (102).

10. A variable speed driving apparatus for an AC motor as claimed in claim 5, wherein the regulator further comprises: differentiators (605, 606, 607) for differentiating phase current values ($i_{1a}$, $i_{1b}$, $i_{1c}$) detected by said current detectors (105, 106, 107) to produce output signals (601a, 601b, 601c), and means for subtracting these output signals from said reference phase voltage values ($v_{1a}^*$, $v_{1b}^*$, $v_{1c}^*$) output from said second vector transformer (402) and for outputting the results of said subtracting means to said power converter (102).

## Patentansprüche

1. Antriebsvorrichtung mit variabler Geschwindigkeit für einen Wechselstrommotor (101) mit einem Referenzwechselspannungsgeber (103) für die Ausgabe erster Referenzwechselspannungswerte ($v_{1a}^*$, $v_{1b}^*$, $v_{1c}^*$) einschließlich einer Frequenz und Amplitude, einen Energiewandler (102) zur Einspeisung von Wechselspannung mit variabler Spannung und variabler Frequenz basierend auf zweiten Referenzwechselspannungswerten ($v_{1a}^*$, $v_{1b}^*$, $v_{1c}^*$);

   Stromdetektoren (105, 106, 107) zur Messung von Phasenströmen ($i_{1a}$, $i_{1b}$, $i_{1c}$), die vom Energiekonverter (102) ausgegeben werden;
   eine Regelvorrichtung (104, 201, 601, 701), in welche die Phasenstromwerte ($i_{1a}$, $i_{1b}$, $i_{1c}$), welche durch die Stromdetektoren (105, 106, 107) gemessen werden, eingespeist werden, und welche Signale (104a-c; 201a-c; 601a-c; 701a-c) an eine Anzahl von Subtraktoren ausgibt, welche die Ausgabesignale der Regelvorrichtung von den ersten Referenzwechselspannungswerten ($v_{1a}^*$, $v_{1b}^*$, $v_{1c}^*$) subtrahieren und die Ergebnisse dieser Subtraktion an den Energiewandler (102) als zweite Referenzwechselspannungswerte ausgibt.

2. Antriebsvorrichtung mit variabler Geschwindigkeit nach Anspruch 1, **dadurch gekennzeichnet,** daß die Regelvorrichtung (104, 201) Verstärker (120, 121, 122) zur Verstärkung der Phasenstromwerte ($i_{1a}$, $i_{1b}$, $i_{1c}$), welche durch die Stromdetektoren (105, 106, 107) gemessen wurden, besitzt, wobei die verstärkten Werte in die Subtraktoren eingespeist werden.

3. Antriebsvorrichtung mit variabler Geschwindigkeit nach Anspruch 1, **dadurch gekennzeichnet**, daß die Regelvorrichtung (601, 701) Differentiatoren (605, 606, 607) zur Differenzierung der Phasenstromwerte ($i_{1a}$, $i_{1b}$, $i_{1c}$), welche durch die Stromdetektoren (105, 106, 107) gemessen wurden, besitzt, wobei die differenzierten Werte (601a, 601b, 601c; 701a, 701b, 701c) in die Subtraktoren eingespeist werden.

4. Antriebsvorrichtung mit variabler Geschwindigkeit nach Anspruch 1, **wobei** die Regelvorrichtung (401, 402, 403, 404, 901) besitzt:

   einen Referenzwertgeber (401) für Frequenz- und Biaxialspannung zur Erzeugung eines Referenzprimärfrequenzwertes ($\omega_1$) und Referenzbiaxialspannungswerte ($v_{1d}^*$, $v_{1q}^*$) des Wechselspannungsmotors in einem rotierenden Orthogonal-Koordinatensystem;
   einen ersten Vektortransformer (404), in den ein Phasenwert, der aus dem Referenzprimärfrequenzwert abgeleitet ist, eingegeben wird, um gemessene Phasenstromwerte ($i_{1a}$, $i_{1b}$, $i_{1c}$), die durch die Stromdetektoren (105, 106, 107) gemessen wurden, in Orthogonal-Biaxialstromkomponenten ($i_{1d}$, $i_{1q}$) zu transformieren;
   weiterhin Regelvorrichtungen (405, 901), die auf die Orthogonal-Biaxialstromkomponenten ($i_{1d}$, $i_{1q}$) die Ausgabe des ersten Vektortransformers (404) anwenden;
   Subtraktoren zur Subtraktion von Ausgangssignalen (405d, 405q, 901d, 901q) der weiteren Regelvorrichtungen (405, 901) von den Referenzbiaxialspannungswerten ($v_{1d}^*$, $v_{1q}^*$); und
   einen zweiten Vektortransformer (402) zur Transformation von Ausgangssignalen der Subtrahierer in Referenzphasenspannungswerte ($v_{1a}^*$, $v_{1b}^*$, $v_{1c}^*$) und zur Ausgabe dieser Referenzphasenspannungswerte an den Energiewandler (102).

5. Antriebsvorrichtung mit variabler Geschwindigkeit nach Anspruch 4, **wobei** die weitere Regelvorrichtung (405) Verstärker (406, 407) besitzt, um die Orthogonal-Biaxialstromkomponenten ($i_{1d}$, $i_{1q}$), die vom ersten Vektortransformer (404) ausgegeben werden, zu verstärken.

6. Antriebsvorrichtung mit variabler Geschwindigkeit nach Anspruch 4, **wobei** die weitere Regelvorrichtung (901) besitzt:

Differentiatoren (904, 907) und Verstärker (905, 906) besitzt, in welche die Orthogonal-Biaxialstromkomponenten ($i_{1d}$, $i_{1q}$) eingespeist werden,
Multiplizierer (908, 909) zum Multiplizieren von Ausgangssignalen der Verstärker (905, 906) und des Referenzprimärfrequenzwertes ($\omega_1$), und Additions- und
Subtraktionsvorrichtungen zur Addition und Subtraktion von Ausgangssignalen der Multiplizierer (908, 909) zu und von Ausgangssignalen der Differentiatoren (904, 907).

7. Antriebsvorrichtung mit variabler Geschwindigkeit für einen Wechselstrommotor nach Anspruch 2, **wobei** die Regelvorrichtung weiterhin besitzt:

   Differentiatoren (605, 606, 607) zur Differenzierung der Phasenstromwerte ($i_{1a}$, $i_{1b}$, $i_{1c}$), welche durch die Stromdetektoren (105, 106, 107) gemessen werden; und
   Vorrichtungen zur Subtraktion von Ausgangssignalen (601a, 601b, 601c) der Differentiatoren (605, 606, 607) von den Referenzwechselspannungswerten ($v_{1a}^*$, $v_{1b}^*$, $v_{1c}^*$) und zur Ausgabe der Ergebnisse der Subtraktion an den Energiewandler (102).

8. Antriebsvorrichtung mit variabler Geschwindigkeit für einen Wechselstrommotor nach Anspruch 5, **wobei** der weitere Regler (405, 901) zusätzlich besitzt:
   Differentiatoren (904, 907) und Verstärker (905, 906), in welche die Orthogonal-Biaxialstromkomponenten ($i_{1d}$, $i_{1q}$) eingespeist werden, Multiplizierer (908, 909) zur Multiplikation von Ausgangssignalen der Verstärker (905, 906) und des Referenzprimärfrequenzwertes ($\omega_1$), und Additions- und Subtraktionsvorrichtungen zur Addition und Subtraktion der Ausgangssignale der Multiplizierer (908, 909) zu und von Ausgangssignalen der Differentiatoren (904, 907).

9. Antriebsvorrichtung mit variabler Geschwindigkeit für einen Wechselspannungsmotor nach Anspruch 6, **wobei** der Regler weiterhin besitzt:

   Verstärker zur Verstärkung der Phasenstromwerte, welche durch die Stromdetektoren (105, 106, 107) gemessen werden; und
   Vorrichtungen zur Subtraktion von Ausgangssignalen (104a, 104b, 104c) des Reglers von den Referenzphasenspannungswerten ($v_{1a}^*$, $v_{1b}^*$, $v_{1c}^*$), welche von dem zweiten Vektortransformer (402) ausgegeben werden und zur Ausgabe von Ergebnissen der Subtraktionsvorrichtung an den Energiewandler (102).

10. Antriebsvorrichtung mit variabler Geschwindigkeit für einen Wechselstrommotor nach Anspruch 5, **wobei** der Regler weiterhin besitzt:
    Differentiatoren (605, 606, 607) zur Differenzierung von Phasenstromwerten ($i_{1a}$, $i_{1b}$, $i_{1c}$), welche durch die Stromdetektoren (105, 106, 107) gemessen werden, um Ausgangssignale (601a, 601b, 601c) zu erzeugen, und eine Vorrichtung zur Subtraktion dieser Ausgangssignale von den Referenzphasenspannungswerten ($v_{1a}^*$, $v_{1b}^*$, $v_{1c}^*$), welche vom zweiten Vektortransformer (402) ausgegeben werden, und zur Ausgabe der Ergebnisse der Subtraktionsvorrichtung an den Energiewandler (102).

## Revendications

1. Dispositif d'entraînement à vitesse variable pour moteur à courant alternatif (101) comportant un générateur (103) de tension de courant alternatif de référence destiné à émettre des premières valeurs de tension de courant alternatif de référence ($v_{1a}^*$, $v_{1b}^*$, $v_{1c}^*$) comportant une fréquence et une amplitude, un convertisseur de puissance (102) pour envoyer une tension de courant alternatif de tension variable et de fréquence variable sur la base de secondes valeurs de tension de courant alternatif de référence ($v_{1a}^*$, $v_{1b}^*$, $v_{1c}^*$),

   des détecteurs de courant (105, 106, 107) pour détecter des courants de phase ($i_{1a}$, $i_{1b}$, $i_{1c}$) émis par ledit convertisseur de puissance (102),
   un moyen régulateur (104, 201, 601, 701) dans lequel sont entrées les valeurs de courant de phase ($i_{1a}$, $i_{1b}$, $i_{1c}$) détectées par les détecteurs de courant (105, 106, 107) et qui émet des signaux (104a-c ; 201a-c ; 601a-c ; 701a-c) vers plusieurs soustracteurs qui soustraient les signaux émis par ledit moyen régulateur desdites premières valeurs de tension de courant alternatif de référence ($v_{1a}^*$, $v_{1b}^*$, $v_{1c}^*$) et émettent les résultats de ladite soustraction vers ledit convertisseur de puissance (102) en tant que secondes valeurs de tension de courant alternatif de référence.

**2.** Dispositif d'entraînement à vitesse variable selon la revendication 1, caractérisé en ce que le moyen régulateur (104, 201) comporte des amplificateurs (120, 121, 122) pour amplifier lesdites valeurs de courant de phase ($i_{1a}$, $i_{1b}$, $i_{1c}$) détectées par lesdits détecteurs de courant (105, 106, 107), les valeurs amplifiées étant entrées dans les soustracteurs.

**3.** Dispositif d'entraînement à vitesse variable selon la revendication 1, caractérisé en ce que le moyen régulateur (601, 701) comporte des différentiateurs (605, 606, 607) pour différencier les valeurs de courant de phase ($i_{1a}$, $i_{1b}$, $i_{1c}$) détectées par lesdits détecteurs de courant (105, 106, 107), les valeurs différentiées (601a, 601b, 601c ; 701a, 701b, 701c) étant entrées dans les soustracteurs.

**4.** Dispositif d'entraînement à vitesse variable selon la revendication 1, dans lequel le moyen régulateur (401, 402, 403, 404, 901) comporte un générateur (401) de valeur de fréquence de référence et de valeur de tension bi-axiale de référence pour produire une valeur de fréquence principale de référence ($\omega_1$) et des valeurs de tension bi-axiale de référence ($v_{1d}^*$, $v_{1q}^*$) dudit moteur à courant alternatif dans un système de coordonnées orthogonales tournant ;

un premier transformateur de vecteur (404), auquel une valeur de phase activée par ladite valeur de fréquence principale de référence est entrée, pour transformer les valeurs de courant de phase détectées ($i_{1a}$, $i_{1b}$, $i_{1c}$), détectées par lesdits détecteurs de courant (105, 106, 107) en composantes orthogonales de courant bi-axial ($i_{1d}$, $i_{1q}$) ;

un autre moyen régulateur (405, 901) agissant sur lesdites composantes orthogonales de courant bi-axial ($i_{1d}$, $i_{1q}$) émises par ledit premier transformateur de vecteur (404) ;

des soustracteurs pour soustraire les signaux de sortie (405d, 405q, 901d, 901q) dudit autre moyen régulateur (405, 901) desdites valeurs de tension axiale de référence ($v_{1d}^*$, $v_{1q}^*$) ; et

un second transformateur de vecteur (402) pour transformer les signaux de sortie des soustracteurs en valeurs de tension de phase de référence ($v_{1a}^*$, $v_{1b}^*$, $v_{1c}^*$) et pour émettre lesdites valeurs de tension de phase de référence vers ledit convertisseur de puissance (102).

**5.** Dispositif d'entraînement à vitesse variable selon la revendication 4, dans lequel l'autre moyen régulateur (405) comporte des amplificateurs (406, 407) pour amplifier lesdites composantes orthogonales de courant bi-axial ($i_{1d}$, $i_{1q}$) émises par ledit premier transformateur de vecteur (404).

**6.** Dispositif d'entraînement à vitesse variable selon la revendication 4, dans lequel l'autre moyen régulateur (901) comporte des différentiateurs (904, 907) et des amplificateurs (905, 906) dans lesquels lesdites composantes orthogonales de courant bi-axial ($i_{1d}$, $i_{1q}$) sont entrées, des multiplicateurs (908, 909) destinés à multiplier les signaux de sortie provenant desdits amplificateurs (905, 906) et ladite valeur de fréquence principale de référence ($\omega_1$), et des moyens d'addition et de soustraction pour ajouter et soustraire des signaux de sortie desdits multiplicateurs (908, 909) à des signaux de sortie et à partir de signaux de sortie desdits différentiateurs (904, 907).

**7.** Dispositif d'entraînement à vitesse variable pour moteur à courant alternatif selon la revendication 2, dans lequel le moyen régulateur comportent de plus :

des différentiateurs (605, 606, 607) pour différencier les valeurs de courant de phase ($i_{1a}$, $i_{1b}$, $i_{1c}$) détectées par lesdits détecteurs de courant (105, 106, 107) ; et

des moyens pour soustraire les signaux de sortie (601a, 601b, 601c) desdits différentiateurs (605, 606, 607) desdites valeurs de tension de courant alternatif de référence ($v_{1a}^*$, $v_{1b}^*$, $v_{1c}^*$) et pour émettre les résultats de ladite soustraction vers ledit convertisseur de puissance (102).

**8.** Dispositif d'entraînement à vitesse variable pour moteur à courant alternatif selon la revendication 5, dans lequel l'autre régulateur (405, 901) comporte de plus des différentiateurs (904, 907) et des amplificateurs (905, 906) dans lesquels sont entrées lesdites composantes orthogonales de courant bi-axial ($i_{1d}$, $i_{1q}$), des multiplicateurs (908, 909) pour multiplier les signaux de sortie desdits amplificateurs (905, 906) et ladite valeur de fréquence principale de référence ($\omega_1$), et des moyens d'addition et de soustraction pour ajouter et soustraire des signaux de sortie desdits multiplicateurs (908, 909) à des signaux de sortie et à partir de signaux de sortie desdits différentiateurs (904, 907).

**9.** Dispositif d'entraînement à vitesse variable pour moteur à courant alternatif selon la revendication 6, dans lequel le régulateur comporte de plus :

des amplificateurs pour amplifier lesdites valeurs de courant de phase détectées par lesdits détecteurs de courant (105, 106, 107) ; et

des moyens pour soustraire les signaux de sortie (104a, 104b, 104c) dudit régulateur desdites valeurs de tension de phase de référence ($v_{1a}^*$, $v_{1b}^*$, $v_{1c}^*$) émises par ledit second transformateur de vecteur (402) et pour émettre les résultats desdits moyens de soustraction vers ledit convertisseur de puissance (102).

10. Dispositif d'entraînement à vitesse variable pour moteur à courant alternatif selon la revendication 5, dans lequel le régulateur comporte de plus :

des différentiateurs (605, 606, 607) pour différencier les valeurs de courant de phase ($i_{1a}$, $i_{1b}$, $i_{1c}$) détectées par lesdits détecteurs de courant (105, 106, 107) pour produire des signaux de sortie (601a, 601b, 601c), et des moyens pour soustraire ces signaux de sortie desdites valeurs de tension de phase de référence ($v_{1a}^*$, $v_{1b}^*$, $v_{1c}^*$) émises par ledit second transformateur de vecteur (402) et pour émettre les résultats desdits moyens de soustraction vers ledit convertisseur de puissance (102).

Fig. 1

(a)

(b)

Fig. 2

(a)

(b)

(c)

Fig. 3

Fig. 4

Fig. 5

(a)

(b)

Fig 6

( a )

( b )

( c )

*Fig. 7*

(a)

(b)

Fig. 8

Fig. 9

Fig. 10

Fig. 11

Fig. 12

Fig. 13